(19) **Europäisches Patentamt**

**European Patent Office**

**Office européen des brevets**

(11) **EP 0 563 596 B1**

(12) **EUROPÄISCHE PATENTSCHRIFT**

(45) Veröffentlichungstag und Bekanntmachung des Hinweises auf die Patenterteilung:
**15.07.1998 Patentblatt 1998/29**

(51) Int. Cl.$^6$: **B60T 8/32**

(21) Anmeldenummer: **93103337.7**

(22) Anmeldetag: **03.03.1993**

(54) **Verfahren zur Bestimmung von Bremskennwerten**

Procedure for determination of brake reference values

Procédé pour déterminer des valeurs de référence de freinage

(84) Benannte Vertragsstaaten:
**DE FR GB IT SE**

(30) Priorität: **31.03.1992 DE 4210576**

(43) Veröffentlichungstag der Anmeldung:
**06.10.1993 Patentblatt 1993/40**

(73) Patentinhaber:
- **TEMIC TELEFUNKEN microelectronic GmbH**
  **74072 Heilbronn (DE)**
- **DAIMLER-BENZ AKTIENGESELLSCHAFT**
  **70567 Stuttgart (DE)**

(72) Erfinder:
- **Helldörfer, Reinhard**
  **W-8523 Igelsdorf (DE)**
- **Töpfer, Bernhard, Dr.**
  **W-7000 Stuttgart 60 (DE)**
- **Leuteritz, Jürgen**
  **W-8500 Nürnberg 90 (DE)**
- **Gramann, Matthias**
  **W-8567 Neunkirchen a. Sand (DE)**

(74) Vertreter:
**Maute, Hans-Jürgen, Dipl.-Ing. et al**
**TEMIC TELEFUNKEN microelectronic GmbH**
**Postfach 35 35**
**74025 Heilbronn (DE)**

(56) Entgegenhaltungen:
EP-A- 0 152 602          EP-A- 0 173 954
EP-A- 0 219 023          EP-A- 0 393 375
EP-A- 0 405 114

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Beim Bremsvorgang eines Kraftfahrzeugs treten an jedem Rad eine Vielzahl von Kräften auf - beispielsweise die Bremskraft, die dynamische Radlast (die vertikalen Kräfte auf die Achse beim Fahren), Drehkräfte, Koppelkräfte, Trägheitskräfte etc.

Die Bremskraft als wichtigste dieser Kräfte hängt wiederum bei den meisten Bremssystemen vom im Bremszylinder wirkenden Bremsdruck ab; das Verhältnis aus der im Reifenaufstandspunkt erreichbaren Bremskraft und dem Bremsdruck in den Bremszylindern - der Bremskennwert oder die Bremskraftentfaltung - ist daher bei diesen Bremssystemen eine aufschlußreiche Größe zur Kontrolle oder Steuerung bzw. Regelung des Bremsvorgangs.

Aus der EP-A-0 393 375 ist ein Verfahren zur Bestimmung des Radschlupfes einzelner Räder eines Fahrzeuges bekannt, wobei aus dem ermittelten Werten des Radschlupfes weitere Größen abgeleitet werden. Der Radschlupf wird bestimmt, indem die Drehzahlen der Räder ohne beaufschlagte Bremskraft und mit beaufschlagter Bremskraft gemessen werden.

Der Erfindung liegt die Aufgabe zugrunde, ein einfaches und dennoch genaues Verfahren zur Bestimmung von Bremskennwerten anzugeben.

Diese Aufgabe wird erfindungsgemäß durch die Merkmale im Kennzeichen des Patentanspruchs 1 gelöst.

Vorteilhafte Weiterbildungen des erfindungsgemäßen Verfahrens ergeben sich aus den Unteransprüchen.

Bei Kenntnis der Radgeschwindigkeit zumindest eines Rades des Kraftfahrzeugs und der Druckwerte in den Bremszylindern lassen sich mit dem vorgestellten Verfahren unter Zuhilfenahme des horizontalen Kräftegleichgewichts - dieses besagt, daß die während des Bremsvorgangs geleistete Bremskraft in erster Näherung der (Newton'schen) Trägheitskraft entspricht - die Relation zwischen den Bremskennwerten aller bremsdrucksensierten Räder (Achsen) bzw. dem Mittelwert des Bremskennwerts für alle nicht-bremsdrucksensierten Räder (Achsen) des Fahrzeugs bestimmen. Sind die Bremskennwerte bekannt, lassen sich weitergehende Aussagen über den Bremsprozeß treffen bzw. können gezielte (Steuerungs- oder Regelungs-) Eingriffe in den Bremsprozeß vorgenommen werden.

Die Bestimmung der Bremskennwerte umfaßt folgende Verfahrensschritte:

- Der Bremsvorgang wird in mehrere Meß-Zeitintervalle unterteilt, deren Anzahl mindestens so groß wie die Zahl der zu bestimmenden Bremskennwerte ist, im allgemeinen jedoch größer als die Zahl der zu bestimmenden Bremskennwerte gewählt wird; die Zeitdauer der Meß-Zeitintervalle wird so gewählt, daß die Gesamtdauer aller Meß-Zeitintervalle wesentlich kürzer als die Dauer des Bremsvorgangs ist. Die verschiedenen Meß-Zeitintervalle sollten annähernd gleichen Verhältnissen unterworfen sein, um den Einfluß anderer Faktoren auf die Bestimmung der Bremskennwerte zu minimieren; vorzugsweise werden sie daher innerhalb eines engen Zeitraums des Bremsvorgangs gebildet - beispielsweise unmittelbar hintereinander - und liegen beispielsweise etwa in der Mitte des Bremsvorgangs. Grundsätzlich lassen sich ebenso Meßintervalle aus verschiedenen Bremsvorgängen verwenden, sofern sie bezüglich bekannter Einflußparameter (wie z. B. Ausgangsgeschwindigkeit) vergleichbar sind.

- In jedem Meß-Zeitintervall wird die momentane Bremskraft der einzelnen Räder/Achsen der jeweiligen Trägheitskraft des Fahrzeugs gleichgesetzt - es wird demnach das horizontale Kräftegleichgewicht ohne Berücksichtigung von (vernachlässigbaren) Faktoren wie Rollwiderstandskräfte, aerodynamische Kräfte etc. aufgestellt.
Die für das Kräftegleichgewicht benötigten Größen können ermittelt werden: die Bremskraft bei Kenntnis des gemessenen Bremsdrucks in den Bremszylindern (unbekannt ist damit nur noch der Bremskennwert) und die auf die Gesamtmasse bezogene Trägheitskraft bei Kenntnis der gemessenen Radgeschwindigkeit(en) (beispielsweise durch Sensierung der Raddrehzahl). Somit lassen sich aus den Kräftegleichgewichts-Gleichungen der verschiedenen Meß-Zeitintervalle die auf die Gesamtmasse bezogenen Bremskennwerte der einzelnen Räder/Achsen bestimmen.

- Die Gleichungen für das Kräftegleichgewicht aus jeweils zwei Meß-Zeitintervallen können voneinander subtrahiert werden; als Folge davon lassen sich Meßfehler eliminieren bzw. kann die Genauigkeit der Bremskennwert-Bestimmung verbessert werden.
Weiterhin wird durch die Differenzbildung der Kräftegleichgewichts-Gleichungen erreicht, daß für den zur Bestimmung der Bremskraft benötigten Druck anstatt des in den Bremszylindern gemessenen Bremsdrucks richtigerweise der beim Bremsvorgang eigentlich wirksame effektive Bremsdruck an den Bremsbacken/Bremstrommeln berücksichtigt wird.

- Masseunabhängige Relativwerte des Bremskennwerts erhält man, wenn der auf die Gesamtmasse bezogene Bremskennwert eines Rades/einer Achse zu einem beliebigen zweiten Bremskennwert eines anderen Rades/einer anderen Achse ins Verhältnis gesetzt und hierdurch die Masse des Kraftfahrzeugs eliminiert wird.

- Systematische Abhängigkeiten - beispielsweise vom Geschwindigkeits- oder Verzögerungsniveau der Bremskennwerte - können bei der Bestimmung der Bremskennwerte durch einen entsprechenden funktionalen Ansatz berücksichtigt werden.

- Die ermittelten Bremskennwerte werden anhand bestimmter Plausibilitätsbetrachtungen überprüft bzw. kontrolliert; liegen sie nicht innerhalb eines (beispielsweise empirisch festgelegten) Bereichs, wird der Wert verworfen und eine neue Bestimmung durchgeführt.

Das vorgestellte Verfahren vereinigt mehrere Vorteile in sich:

- es kann für alle Fahrzeuge mit den angeführten Voraussetzungen (Bremsdruck-/Raddrehzahlmessung) standardisiert eingesetzt werden,

- es ist auf einfache Weise ohne großen Aufwand realisierbar und damit kostengünstig,

- bei Kenntnis der Bremskennwerte (diese sind für viele Steuerungs-/Regelungsprozesse aufschlußreich) können weitere Aussagen über den Bremsprozeß gewonnen werden,

- der Bremsdruck kann gezielt gesteuert und damit der Bremsvorgang optimiert bzw. der Bremsprozeß sicherer gemacht werden.

Das Verfahren zur Bestimmung der Bremskennwerte und eine Anwendungsmöglichkeit wird im folgenden anhand eines Ausführungsbeispiels erläutert - hierbei wird die Verbesserung des Bremsvorgangs bei einem LKW-Gespann aus einem zweiachsigen Zugfahrzeug mit Bremsdruck-Sensoren an jeder Achse und einem zweiachsigen Anhänger mit vorgegebenem Bremsdruck in der Steuerleitung beschrieben.
Bei derartigen gekoppelten Systemen (im Beispielsfall der Lastzug mit Zugfahrzeug und Anhänger) treten beim Bremsvorgang folgende Probleme auf: da die Bremskraft meist unterschiedlich verteilt ist, sind die Achsen der Anhänger sehr sensibel gegenüber Überbremsungen und müssen daher mit vermindertem Bremsdruck angesteuert werden; außerdem treten immer dann erhebliche (die Sicherheit beeinträchtigende) Längskräfte zwischen den einzelnen Fahrzeugen auf, wenn der Quotient aus der Bremskraft und der - vom Fahrzeug fest vorgegebenen - dynamischen Radlast an den einzelnen Rädern oder Achsen unterschiedlich groß ist.
Um den Anhänger optimal abbremsen zu können bzw. um die Längskräfte zu minimieren, muß die Bremskraft über den Bremsdruck entsprechend geregelt werden, wozu wiederum der Bremskennwert bekannt sein muß. Die Bremskennwerte sollen beispielsweise für die beiden Achsen des Zugfahrzeugs und für den Anhänger ermittelt werden; hierzu muß während mindestens dreier Meß-Zeitintervalle $t_i$ mit jeweils unterschiedlicher Bremsdruckverteilung jeweils die Bremskraft dieser Achsen bzw. des Anhängers und die Trägheitskraft des Lastzugs bestimmt werden:

- die beim Bremsvorgang wirksame Bremskraft $F_B$ pro Achse des Zugfahrzeugs bzw. als Mittelwert für den Anhänger ist gegeben durch:

$$F_B = BKW_A \cdot p_A \qquad (1);$$

$BKW_A$ ist der jeweilige Bremskennwert, $p_A$ der jeweilige effektive Bremsdruck der betrachteten Achsen A (A = Vorderachse Zugfahrzeug/Hinterachse Zugfahrzeug/"mittlere Achse" des Anhängers)

- die (Newton'sche) Trägheitskraft $F_T$ beim Bremsvorgang läßt sich folgendermaßen ausdrücken:

$$F_T = m \cdot z \qquad (2);$$

$m$ ist die Gesamtmasse des Lastzuges bzw. Fahrzeugs, $z$ ist die Bremsverzögerung (die negative Beschleunigung) des Lastzugs bzw. Fahrzeugs

- durch Bildung des Kräftegleichgewichts $\Sigma F_B = F_T$ erhält man mit der Summe der betrachteten 3 Achsen A aus Gleichung (1) und (2):

$$\Sigma (BKW_A \cdot p_A) = m \cdot z \qquad (3);$$

- in jedem der Meß-Zeitintervalle $t_i$ (beispielsweise mit einer Dauer von ca. 10 - 100 ms) erhält man entsprechend Gleichung (3) für alle 3 Achsen A jeweils eine Gleichung $\Sigma\, F_B = F_T$, welche die 3 unbekannten Kennwerte $BKW_A$ enthält (in der Form von Gleichung (3))

- während der Meß-Zeitintervalle $t_i$ wird für den benötigten Druckwert $p_A$ der Bremsdruck in den Bremszylindern der Achsen A sensiert und die jeweilige Bremsverzögerung z beispielsweise mit Hilfe einer Raddrehzahlmessung bestimmt. Beispielsweise werden 4 Zeitintervalle $t_1 - t_4$ (i = 4) während des Bremsvorgangs ausgewertet und somit 4 Gleichungen (3) gebildet; durch Auswertung dieser Gleichungen werden die (masseabhängigen) Quotienten $BKW_A/m$ für die angegebenen Achsen A des Lastzugs ermittelt

- die Gleichungen (3) für das Kräftegleichgewicht aus zwei verschiedenen Zeitintervallen $t_i$ werden jeweils voneinander subtrahiert: dadurch wird einerseits die Zahl der auswertbaren Gleichung erhöht (beispielsweise von 4 Gleichungen auf 6 Gleichungen bei 4 Meß-Zeitintervallen $t_1 - t_4$) und anderseits der in den Bremszylindern gemessene bzw. sensierte Bremsdruck in den in Gleichung (3) benötigten effektiven Bremsdruck übergeführt (es gilt: effektiver Bremsdruck = gemessener Bremsdruck - Anlegedruck )

- die Geschwindigkeitsabhängigkeit und/oder die Beschleunigungsabhängigkeit des Bremskennwerts wird durch einen entsprechenden Ansatz in den Gleichungen (3) berücksichtigt, beispielsweise durch den Ansatz einer linearen Abhängigkeit des Bremskennwerts

- wird das Verhältnis der gemäß Gleichung (3) ermittelten Bremskennwerte $BKW_A$ an zwei verschiedenen Achsen A gebildet (beispielsweise von Vorderachse zur Hinterachse des Zugfahrzeugs), entfällt die (meist unbekannte) Gesamtmasse m des Lastzugs.

Mit Hilfe der ermittelten Bremskennwerte läßt sich nun der Bremsprozeß des Lastzugs durch gezielte Vorgabe des Bremsdrucks definiert steuern bzw. regeln und damit der Bremsvorgang optimieren; weiterhin können Längskräfte minimiert oder zumindest reduziert werden.

**Patentansprüche**

1. Verfahren zur Bestimmung von Bremskennwerten, die den Zusammenhang zwischen dem Bremsdruck und der Bremskraft an einem Rad bzw. einer Achse eines Kraftfahrzeugs oder eines Teilfahrzeugs einer Fahrzeugkombination beim Bremsvorgang des Kraftfahrzeugs oder der Fahrzeugkombination definieren, dadurch gekennzeichnet, daß das Kraftfahrzeug Mittel zur Bestimmung der Radgeschwindigkeit und des Bremsdrucks (p) aufweist, daß während eines oder mehrerer Bremsvorgänge mit unterschiedlicher Bremsdruckverteilung zwischen den Rädern, Achsen oder Teilfahrzeugen Meß-Zeitintervalle ($t_i$) gebildet werden, in denen jeweils das Kräftegleichgewicht zwischen der Bremskraft ($F_B$) und der Trägheitskraft ($F_T$) des Kraftfahrzeugs aufgestellt wird, und daß aus den Gleichungen für das Kräftegleichgewicht in den Meß-Zeitintervallen ($t_i$) die massebezogenen Bremskennwerte (BKW) der bremsdrucksensierten Räder bzw. Achsen und ein Mittelwert für den massebezogenen Bremskennwert (BKW) aller nicht-bremsdrucksensierten Räder bzw. Achsen ermittelt werden.

2. Verfahren nach Anspruch 1, dadurch gekennzeichnet, daß die Zahl der Meß-Zeitintervalle mindestens so groß wie die Zahl der zu bestimmenden Bremskennwerte (BKW) gewählt wird.

3. Verfahren nach Anspruch 1 oder 2, dadurch gekennzeichnet, daß die Meß-Zeitintervalle ($t_i$) innerhalb eines engen Zeitraums des Bremsvorgangs gebildet werden.

4. Verfahren nach Anspruch 3, dadurch gekennzeichnet, daß die Meß-Zeitintervalle ($t_i$) unmittelbar aufeinanderfolgen.

5. Verfahren nach Anspruch 1 oder 2, dadurch gekennzeichnet, daß Meß-Zeitintervalle ($t_i$) aus verschiedenen, bezüglich vorbestimmter Parameter vergleichbaren Bremsvorgängen verwendet werden.

6. Verfahren nach einem der Ansprüche 1 bis 5, dadurch gekennzeichnet, daß die Gesamtdauer aller Meß-Zeitintervalle ($t_i$) wesentlich kürzer als die Dauer des jeweiligen Bremsvorgangs gewählt wird.

7. Verfahren nach einem der Ansprüche 1 bis 6, dadurch gekennzeichnet, daß das Verhältnis zweier Bremskennwerte (BKW) von unterschiedlichen Rädern bzw. Achsen gebildet wird und daraus masseunabhängige Bremskennwert-Relativwerte ermittelt werden.

**8.** Verfahren nach einem der Ansprüche 1 bis 7, dadurch gekennzeichnet, daß die Gleichungen für das Kräftegleichgewicht in jeweils zwei verschiedenen Meß-Zeitintervallen zueinander in Beziehung gebracht werden.

**9.** Verfahren nach Anspruch 8, dadurch gekennzeichnet, daß für den Bremsdruck (p) anstatt des gemessenen Bremsdrucks der effektive Bremsdruck bei der Bestimmung der Bremskennwerte (BKW) berücksichtigt wird.

**10.** Verfahren nach Anspruch 8 oder 9, dadurch gekennzeichnet, daß die Geschwindigkeitsabhängigkeit der Bremskennwerte (BKW) bei der Bestimmung der Bremskennwerte (BKW) berücksichtigt wird.

**11.** Verfahren nach einem der Ansprüche 8 bis 10, dadurch gekennzeichnet, daß die Verzögerungsabhängigkeit der Bremskennwerte (BKW) bei der Bestimmung der Bremskennwerte (BKW) berücksichtigt wird.

**12.** Verfahren nach einem der Ansprüche 1 bis 11, dadurch gekennzeichnet, daß die Radgeschwindigkeit während des Bremsvorgangs an mindestens einem Rad des Kraftfahrzeugs über Geschwindigkeitssensoren gemessen und hieraus durch Ableitung, Differenzbildung oder dergleichen die Verzögerung bestimmt wird.

**13.** Verfahren nach einem der Ansprüche 1 bis 11, dadurch gekennzeichnet, daß die Radgeschwindigkeit während des Bremsvorgangs an mindestens einem Rad des Kraftfahrzeugs über Raddrehzahlsensoren gemessen wird.

**14.** Verfahren nach einem der Ansprüche 1 bis 13 zur Bestimmung von Bremskennwerten (BKW) bei einem Lastkraftwagen mit einer Druckluft-Bremsanlage.

**15.** Verfahren nach Anspruch 14 zur Bestimmung von Bremskennwerten (BKW) bei einem Lastkraftwagen mit elektropneumatischem Bremssystem.

**16.** Verwendung eines Verfahrens nach einem der Ansprüche 1 bis 15 zur Regelung bzw. Steuerung des Bremsvorgangs eines Kraftfahrzeugs.

**17.** Verwendung eines Verfahrens nach einem der Ansprüche 1 bis 13 zur Regelung des Bremsvorganges in einem Lastzug mit Druckluft- oder elektro-pneumatischer Bremsanlage.

**Claims**

**1.** Method of determining braking parameters which define the relationship between the brake pressure and the braking force on a wheel or an axle of a motor vehicle or a component vehicle of a combination vehicle during the process of braking the motor vehicle or the combination vehicle, characterised in that, the motor vehicle has means for determining the speed of the wheel and the brake pressure (p), that during one or more braking processes having a differing distribution of the braking forces between the wheels, axles or component vehicles, there are formed test time intervals ($t_i$) in which, on each occasion, the equilibrium of forces between the braking force ($F_B$) and the inertial force ($F_T$) of the motor vehicle is established, and that the mass-related braking parameters (BKW) for the wheels or axles for which a brake pressure has been sensed and an average value for the mass-related braking parameter (BKW) for all of the wheels or axles for which a brake pressure has not been sensed are obtained from the equations for the equilibrium of forces in the test time intervals ($t_i$).

**2.** Method in accordance with Claim 1, characterised in that, the number of test time intervals is selected to be at least as large as the number of braking parameters (BKW) to be determined.

**3.** Method in accordance with Claim 1 or 2, characterised in that, the test time intervals ($t_i$) are formed within a narrow time period of the braking process.

**4.** Method in accordance with Claim 3, characterised in that, the test time intervals ($t_i$) directly succeed one another.

**5.** Method in accordance with Claim 1 or 2, characterised in that, test time intervals ($t_i$) are used from differing but, with regard to predetermined parameters, comparable braking processes.

**6.** Method in accordance with any of the Claims 1 to 5, characterised in that, the total duration of all of the test time intervals ($t_i$) is selected to be substantially shorter than the duration of the respective braking process.

7. Method in accordance with any of the Claims 1 to 6, characterised in that, the ratio of two braking parameters (BKW) from different wheels or axles is formed and mass independent, braking parameter relative values are obtained therefrom.

8. Method in accordance with any of the Claims 1 to 7, characterised in that, the equations for the equilibrium of forces are related to one another on each occasion during two different test time intervals.

9. Method in accordance with Claim 8, characterised in that, the effective brake pressure is taken into account for the brake pressure (p) during the determination of the braking parameters (BKW) instead of the measured brake pressure.

10. Method in accordance with Claim 8 or 9, characterised in that, the speed dependency of the braking parameters (BKW) is taken into account during the determination of the braking parameters (BKW).

11. Method in accordance with any of the Claims 8 to 10, characterised in that, the deceleration dependency of the braking parameters (BKW) is taken into account during the determination of the braking parameters (BKW).

12. Method in accordance with any of the Claims 1 to 11, characterised in that, the speed of the wheel during the braking process is measured on at least one wheel of the motor vehicle by means of speed sensors and the deceleration is determined therefrom by differentiation, a difference forming process or the like.

13. Method in accordance with any of the Claims 1 to 11, characterised in that, the speed of the wheel during the braking process is measured on at least one wheel of the motor vehicle by means of sensors for the rotational speed of the wheel.

14. Method in accordance with any of the Claims 1 to 13 for determining the braking parameters (BKW) in the case of a lorry having an air brake system.

15. Method in accordance with Claim 14 for determining the braking parameters (BKW) in the case of a lorry having an electro-pneumatic braking system.

16. The use of a method in accordance with any of the Claims 1 to 15 for regulating or controlling the braking process in a motor vehicle.

17. The use of a method in accordance with any of the Claims 1 to 13 for regulating the braking process in the case of a lorry-trailer combination having an air brake system or an electro-pneumatic braking system.

**Revendications**

1. Procédé pour déterminer des caractéristiques de freinage qui définissent la relation entre la pression de freinage et la force de freinage sur une roue ou sur un essieu d'un véhicule à moteur ou d'un véhicule partiel d'un attelage de véhicules lors du processus de freinage du véhicule à moteur ou de l'attelage de véhicules, caractérisé par le fait que le véhicule à moteur présente des moyens pour déterminer la vitesse des roues et la pression de freinage (p), que, pendant un ou plusieurs processus de freinage à répartition différente de la pression de freinage entre les roues, les essieux ou les véhicules partiels, on forme les intervalles de temps de mesure ($t_i$) pour chacun desquels on établit l'équation d'équilibre des forces entre la force de freinage ($F_B$) et la force d'inertie ($F_T$) du véhicule à moteur, et qu'à partir des équations l'équilibre des forces dans les intervalles de temps de mesure ($t_i$), on détermine les caractéristiques de freinage (BKW), rapportées à la masse, des roues des essieux dont on détecte la pression de freinage, ainsi qu'une valeur moyenne pour la caractéristique de freinage (BKW), rapportée à la masse, de toutes les roues ou de tous les essieux dont on ne détecte pas la pression de freinage.

2. Procédé selon la revendication 1, caractérisé par le fait que l'on choisit le nombre des intervalles de temps de mesure au moins aussi grand que le nombre des caractéristiques de mesure (BKW) à déterminer.

3. Procédé selon la revendication 1 ou 2, caractérisé par le fait que l'on forme les intervalles de temps de mesure ($t_i$) à l'intérieur d'un étroit intervalle de temps du processus de freinage.

4. Procédé selon la revendication 3, caractérisé par le fait que les intervalles de temps de mesure ($t_i$) se suivent

immédiatement l'un l'autre.

5. Procédé selon la revendication 1 ou 2, caractérisé par le fait que l'on emploie des intervalles de temps de mesure ($t_i$) provenant de différents processus de freinage, comparables en ce qui concerne des paramètres prédéterminés.

6. Procédé selon l'une revendication des revendications 1 à 5, caractérisé par le fait que l'on choisit la durée totale de tous les intervalles de temps de mesure ($t_i$) sensiblement inférieure à la durée du processus de freinage en question.

7. Procédé selon l'une des revendications 1 à 6, caractérisé par le fait que l'on forme le rapport entre deux caractéristiques de freinage (BKW) de roues différentes ou d'essieux différents et qu'à partir de ce rapport on détermine des valeurs relatives des caractéristiques de freinage indépendantes de la masse.

8. Procédé selon l'une des revendications 1 à 7, caractérisé par le fait que l'on met en relation l'une avec l'autre chacune des équations de l'équilibre des forces dans deux intervalles de temps de mesure différents.

9. Procédé selon la revendication 8, caractérisé par le fait que, pour la détermination des caractéristiques de freinage (BKW), pour la pression de freinage (p), au lieu de la pression de freinage mesurée, on prend en compte la pression de freinage efficace.

10. Procédé selon la revendication 8 ou 9, caractérisé par le fait que lors de la détermination des caractéristiques de freinage (BKW) on prend en compte la fonction de dépendance des caractéristiques de freinage (BKW) à l'égard de la vitesse.

11. Procédé selon l'une revendication des revendications 8 à 10, caractérisé par le fait que lors de la détermination des caractéristiques de freinage (BKW), on prend en compte la fonction de dépendance des caractéristiques de freinage (BKW) à l'égard de la décélération.

12. Procédé selon l'une revendication des revendications 1 à 11, caractérisé par le fait que pendant le processus de freinage on mesure la vitesse des roues sur au moins une roue du véhicule à moteur au moyen de détecteurs de vitesse et que, de là, par déduction, on détermine la formation de la différence ou la décélération de cette roue.

13. Procédé selon l'une revendication des revendications 1 à 11, caractérisé par le fait que pendant le processus de freinage on mesure la vitesse des roues sur au moins une roue du véhicule à moteur au moyen de détecteurs de vitesse de rotation des roues.

14. Procédé selon l'une revendication des revendications 1 à 13, pour déterminer des caractéristiques de freinage (BKW) dans le cas d'un véhicule utilitaire à moteur avec installation de freinage à air comprimé.

15. Procédé selon la revendication 14 pour déterminer des caractéristiques de freinage (BKW) dans le cas d'un véhicule utilitaire à moteur avec système de freinage électro-pneumatique.

16. Emploi d'un procédé selon l'une des revendications 1 à 15 pour réguler ou commander le processus de freinage d'un véhicule à moteur.

17. Emploi d'un procédé selon l'une des revendications 1 à 13, pour réguler le processus de freinage dans un convoi à installation de freinage à air comprimé ou électro-pneumatique.